(19) Europäisches Patentamt / European Patent Office / Office européen des brevets

(11) **EP 4 209 917 A1**

(12) **EUROPEAN PATENT APPLICATION**
published in accordance with Art. 153(4) EPC

(43) Date of publication:
**12.07.2023 Bulletin 2023/28**

(21) Application number: **21863892.2**

(22) Date of filing: **07.05.2021**

(51) International Patent Classification (IPC):
**G06F 16/13** (2019.01)　　　**G06F 3/06** (2006.01)

(52) Cooperative Patent Classification (CPC):
**G06F 3/06; G06F 16/13**

(86) International application number:
**PCT/JP2021/017593**

(87) International publication number:
**WO 2022/049833 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.09.2020　JP 2020149115**

(71) Applicant: **FUJIFILM Corporation**
**Tokyo 106-8620 (JP)**

(72) Inventors:
• **OISHI, Yutaka**
**Tokyo 106-8620 (JP)**
• **WATANABE, Terue**
**Tokyo 106-8620 (JP)**
• **KONDO, Michitaka**
**Tokyo 106-8620 (JP)**
• **UNO, Yuko**
**Tokyo 106-8620 (JP)**

(74) Representative: **Klunker IP**
**Patentanwälte PartG mbB**
**Destouchesstraße 68**
**80796 München (DE)**

(54) **INFORMATION PROCESSING DEVICE, INFORMATION PROCESSING METHOD, AND INFORMATION PROCESSING PROGRAM**

(57) An information processing apparatus calculates, in a case of adding a new magnetic tape to a storage pool, the number of magnetic tapes to be added to the storage pool such that a free capacity of the storage pool after addition of the new magnetic tape is set to be equal to or larger than a capacity obtained by adding, to an assumed value of a total capacity of data to be recorded in the storage pool, an excess according to the number of pieces of parallel processing when recording data in the storage pool, the number being equal to or smaller than a number obtained by multiplying the number of magnetic tapes satisfying an insufficient capacity of the storage pool by the number of pieces of parallel processing, and performs control of adding the calculated number of new magnetic tapes to the storage pool.

FIG. 6

START
↓
RECEIVE ASSUMED VALUE — S10
↓
CALCULATE THE NUMBER OF MAGNETIC TAPES TO BE ADDED — S12
↓
ADD MAGNETIC TAPES — S14
↓
END

**Description**

**BACKGROUND OF THE INVENTION**

1. Field of the Invention

The present disclosure relates to an information processing apparatus, an information processing method, and an information processing program.

2. Description of the Related Art

A technique of configuring a storage pool including a plurality of magnetic tapes, associating the storage pool with a logical volume, and providing the logical volume to a user is disclosed (refer to JP2009-217466A).

**SUMMARY OF THE INVENTION**

In a case where it is expected that a capacity of the storage pool is insufficient, a capacity shortage of the storage pool is resolved by adding a new magnetic tape to the storage pool. In a case where data is recorded in the storage pool by using one tape drive, the minimum number of magnetic tapes that satisfy a required capacity may be added to the storage pool.
However, in a case where data is recorded in parallel on the plurality of magnetic tapes included in the storage pool by using a plurality of tape drives, even when adding the minimum number of magnetic tapes satisfying a required capacity to the storage pool, data may not be recorded in parallel due to a capacity shortage.
In the technique described in JP2009-217466A, in a situation where data is recorded in parallel on the plurality of magnetic tapes included in the storage pool, it is not considered to add the magnetic tape to the storage pool.
The present disclosure has been made in view of the above circumstances, and an object of the present disclosure is to provide an information processing apparatus, an information processing method, and an information processing program capable of adding the appropriate number of magnetic tapes to the storage pool according to the number of pieces of parallel processing when recording data in the storage pool.
According to an aspect of the present disclosure, there is provided an information processing apparatus including: at least one processor, in which the processor is configured to calculate, in a case of adding a new magnetic tape to a storage pool including a plurality of magnetic tapes, the number of magnetic tapes to be added to the storage pool such that a free capacity of the storage pool after addition of the new magnetic tape is set to be equal to or larger than a capacity obtained by adding, to an assumed value of a total capacity of data to be recorded in the storage pool, an excess according to the number of pieces of parallel processing when recording data in the storage pool, the number being equal to or smaller than a number obtained by multiplying the number of magnetic tapes satisfying an insufficient capacity of the storage pool by the number of pieces of parallel processing, and perform control of adding the calculated number of new magnetic tapes to the storage pool.
In the information processing apparatus according to the aspect of the present disclosure, the processor may be configured to calculate, as the number of magnetic tapes to be added to the storage pool, a minimum value of N (N is an integer equal to or larger than 0) satisfying the following equation (1).

$$\text{(free capacity of storage pool} + \text{N} \times \text{capacity of one magnetic tape to be added)} -$$

$$\text{assumed value of total capacity of data to be recorded in storage pool} \geq \text{(number of pieces of}$$

$$\text{parallel processing when recording data in storage pool - 1)} \times \text{capacity of one magnetic tape}$$

$$\cdots (1)$$

Further, in the information processing apparatus according to the aspect of the present disclosure, the processor may be configured to perform control of adding, to the storage pool, all magnetic tapes that are allowed to be added in a case where the number of magnetic tapes that are allowed to be added is equal to or smaller than the calculated number.
Further, according to another aspect of the present disclosure, there is provided an information processing method executed by a processor of an information processing apparatus, the method including: calculating, in a case of adding a new magnetic tape to a storage pool including a plurality of magnetic tapes, the number of magnetic tapes to be added to the storage pool such that a free capacity of the storage pool after addition of the new magnetic tape is set to be equal to or larger than a capacity obtained by adding, to an assumed value of a total capacity of data to be recorded in the storage pool, an excess according to the number of pieces of parallel processing when recording data in the storage pool, the number being equal to or smaller than a number obtained by multiplying the number of magnetic tapes satisfying an insufficient capacity of the storage pool by the number of pieces of parallel processing; and performing control of adding the calculated number of new magnetic tapes to the storage pool.

Further, according to still another aspect of the present disclosure, there is provided an information processing program causing a processor of an information processing apparatus to execute a process including: calculating, in a case of adding a new magnetic tape to a storage pool including a plurality of magnetic tapes, the number of magnetic tapes to be added to the storage pool such that a free capacity of the storage pool after addition of the new magnetic tape is set to be equal to or larger than a capacity obtained by adding, to an assumed value of a total capacity of data to be recorded in the storage pool, an excess according to the number of pieces of parallel processing when recording data in the storage pool, the number being equal to or smaller than a number obtained by multiplying the number of magnetic tapes satisfying an insufficient capacity of the storage pool by the number of pieces of parallel processing; and performing control of adding the calculated number of new magnetic tapes to the storage pool.

According to present disclosure, it is possible to add the appropriate number of magnetic tapes to the storage pool according to the number of pieces of parallel processing when recording data in the storage pool.

**BRIEF DESCRIPTION OF THE DRAWINGS**

Fig. 1 is a block diagram illustrating an example of a configuration of a recording and reproducing system.
Fig. 2 is a block diagram illustrating an example of a hardware configuration of an information processing apparatus.
Fig. 3 is a diagram for explaining a storage pool.
Fig. 4 is a diagram for explaining processing of recording data in a storage pool.
Fig. 5 is a block diagram illustrating an example of a functional configuration of the information processing apparatus.
Fig. 6 is a flowchart illustrating an example of magnetic tape addition processing.

**DESCRIPTION OF THE PREFERRED EMBODIMENTS**

Hereinafter, an example of an embodiment for performing a technique according to the present disclosure will be described in detail with reference to the drawings.

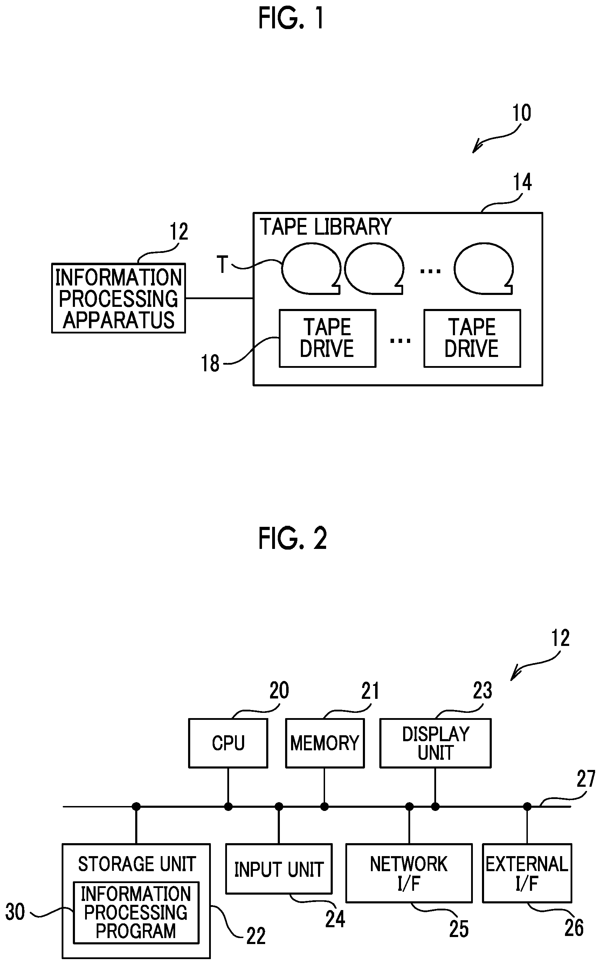

First, a configuration of a recording and reproducing system 10 according to the present embodiment will be described with reference to Fig. 1. As illustrated in Fig. 1, the recording and reproducing system 10 includes an information processing apparatus 12 and a tape library 14. Examples of the information processing apparatus 12 include a server computer and the like.

The tape library 14 includes a plurality of slots (not illustrated) and a plurality of tape drives 18, and a magnetic tape T as an example of a recording medium is loaded in each slot. Each tape drive 18 is connected to the information processing apparatus 12. The tape drive 18 writes or reads data to or from the magnetic tape T under a control of the information processing apparatus 12. Examples of the magnetic tape T include a linear tape-open (LTO) tape.

In a case where the information processing apparatus 12 writes or reads data to or from the magnetic tape T, the magnetic tape T as a write target or a read target is loaded from the slot into a predetermined tape drive 18. In a case where data is written or read to and from the magnetic tape T loaded into the tape drive 18, the magnetic tape T is unloaded from the tape drive 18 into the slot in which the magnetic tape T is originally loaded.

Next, a hardware configuration of the information processing apparatus 12 according to the present embodiment will be described with reference to Fig. 2. As illustrated in Fig. 2, the information processing apparatus 12 includes a central processing unit (CPU) 20, a memory 21 as a temporary memory area, and a non-volatile storage unit 22. Further, the information processing apparatus 12 includes a display unit 23 such as a liquid crystal display, an input unit 24 such as a keyboard and a mouse, a network interface (I/F) 25 connected to a network, and an external I/F 26 to which each tape drive 18 is connected. The CPU 20, the memory 21, the storage unit 22, the display unit 23, the input unit 24, the network I/F 25, and the external I/F 26 are connected to a bus 27.

The storage unit 22 is realized by a hard disk drive (HDD), a solid state drive (SSD), a flash memory, or the like. An information processing program 30 is stored in the storage unit 22 as a storage medium. The CPU 20 reads the information processing program 30 from the storage unit 22, develops the read information processing program 30 in the memory 21, and executes the developed information processing program 30.

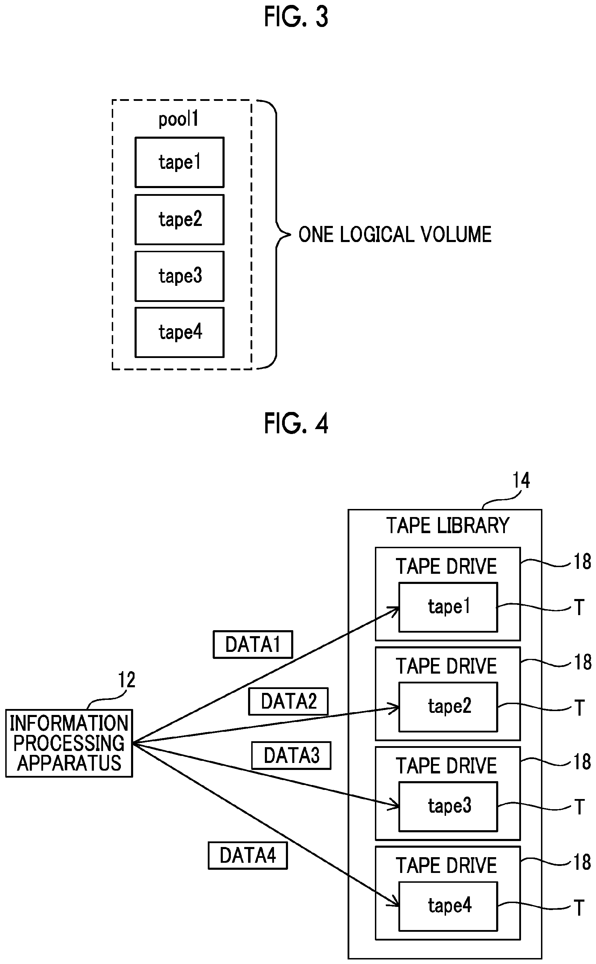

Next, a storage pool including a plurality of magnetic tapes T according to the present embodiment will be described with reference to Fig. 3. As illustrated in Fig. 3, one storage pool includes a plurality of magnetic tapes T. In the present embodiment, a case where four magnetic tapes T are included in one storage pool will be described.

Further, the storage pool is assigned to a logical volume of the information processing apparatus 12, and the logical volume is provided to a user of the recording and reproducing system 10. Therefore, in a case where data to be recorded is received from an external apparatus such as a user terminal, the information processing apparatus 12 performs control of recording the data in the storage pool that is a recording destination and corresponds to the logical volume.

In addition, the tape library 14 according to the present embodiment includes tape drives 18 of which the number is equal to or larger than the number of magnetic tapes T included in one storage pool. Specifically, the tape library 14 includes four tape drives 18.

As illustrated in Fig. 4 as an example, in a case of recording data to be recorded in the storage pool, the information processing apparatus 12 performs control of recording the data to be recorded in parallel on the four magnetic tapes T included in the storage pool by using the four tape drives 18. Fig. 4 illustrates an example in which four pieces of data are recorded in parallel on each of the four magnetic tapes T one by one. Thereby, it is possible to shorten a time required for recording data as compared with a case where data to be recorded is recorded in series on one magnetic tape T.

In a case where data is accumulated in the storage pool and it is assumed that a capacity of the storage pool is insufficient, capacity shortage of the storage pool is resolved by adding a new magnetic tape T to the storage pool.

In a case where data is recorded in the storage pool by using one tape drive 18, the minimum number of magnetic tapes T that satisfy a required capacity may be added. Specifically, in this case, N (N is an integer equal to or larger than 0) magnetic tapes T that satisfy the following equation (A) may be added. A free capacity of the storage pool means a total value of free capacities of all the magnetic tapes T included in the storage pool.

$$\text{(free capacity of storage pool} + N \times \text{capacity of one magnetic tape to be added)} -$$

$$\text{assumed value of total capacity of data to be recorded in storage pool} \geq 0 \cdots \text{(A)}$$

More specifically, a case where the free capacity of the storage pool is 1 TB (= 250 [GB] $\times$ 4 [pieces]), where the assumed value of the total capacity of the data to be recorded in the storage pool in the future by the user is 10 TB, and where the capacity of one magnetic tape T is 12 TB will be described as an example. In this case, assuming that N = 1, the following expression is satisfied.

$$(1\ [\text{TB}] + 1 \times 12\ [\text{TB}]) - 10\ [\text{TB}] = 3\ [\text{TB}] \geq 0$$

In this case, a minimum value of N satisfying the equation (A) is 1, and thus it is sufficient to add one magnetic tape T to the storage pool.

In a case where one magnetic tape T is added to the storage pool, the storage pool includes one magnetic tape T having a free capacity of 12 TB and four magnetic tapes T having a free capacity of 250 GB. In this case, data of 10 TB cannot be recorded in the storage pool in parallel as in 2.5 TB $\times$ 4. Therefore, in a case where a new magnetic tape T is added to the storage pool, the information processing apparatus 12 according to the present embodiment has a function of calculating the number of the magnetic tapes T to be added to the storage pool according to the number of pieces of parallel processing when recording data in the storage pool.

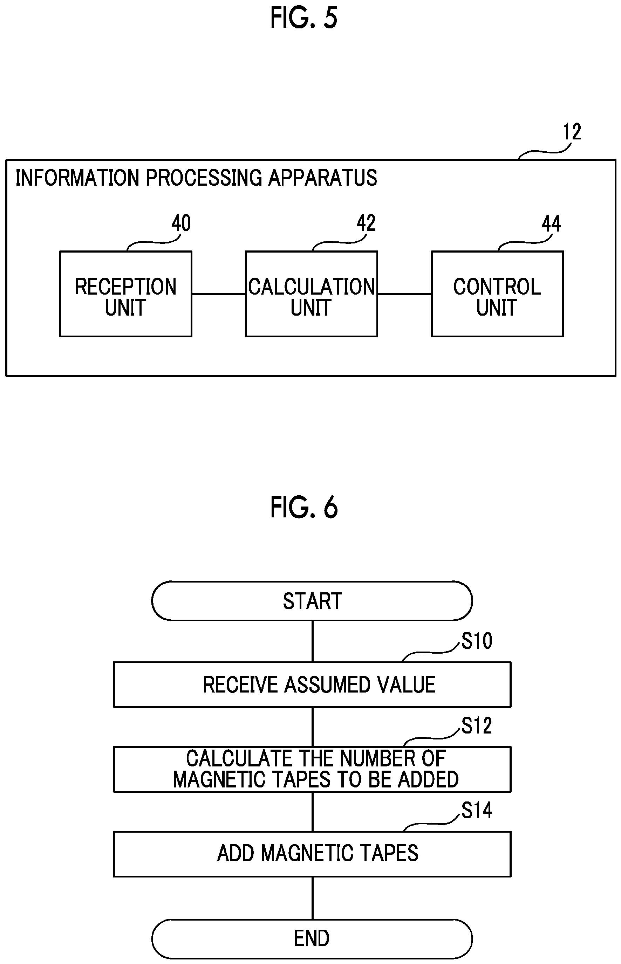

Next, a functional configuration of the information processing apparatus 12 according to the present embodiment will be described with reference to Fig. 5. As illustrated in Fig. 5, the information processing apparatus 12 includes a reception unit 40, a calculation unit 42, and a control unit 44. In a case where the CPU 20 executes the information processing program 30, the information processing apparatus 12 functions as the reception unit 40, the calculation unit 42, and the control unit 44.

The reception unit 40 receives the assumed value V1 of the total capacity of the data to be recorded in the storage pool. The assumed value V1 is input, for example, by an administrator of the recording and reproducing system 10 via the input unit 24. For example, the assumed value V1 may be stored in advance in the storage unit 22 as a setting value. Further, for example, the information processing apparatus 12 may predict the assumed value V1 based on a tendency of a free capacity of the storage pool.

The calculation unit 42 calculates the number of magnetic tapes to be added to the storage pool such that a free capacity of the storage pool after addition of new magnetic tapes T is set to be equal to or larger than a capacity obtained by adding, to the assumed value V1, an excess according to the number P of pieces of parallel processing when recording data in the storage pool, the number being equal to or smaller than a number obtained by multiplying the number of magnetic tapes T satisfying an insufficient capacity of the storage pool by the number P of pieces of parallel processing.

Specifically, the calculation unit 42 calculates, as the number of magnetic tapes T to be added to the storage pool, a minimum value of N (N is an integer equal to or larger than 0) satisfying the following equation (B). A right side of the equation (B) corresponds to an excess according to the number P of pieces of parallel processing.

$$\text{(free capacity of storage pool} + N \times \text{capacity of one magnetic tape to be added)} -$$
$$\text{assumed value V1 of total capacity of data to be recorded in storage pool} \geq \text{(number P of}$$
$$\text{pieces of parallel processing when recording data in storage pool - 1)} \times \text{capacity of one}$$
$$\text{magnetic tape} \cdots \text{(B)}$$

More specifically, a case where a free capacity of the storage pool is 4 TB (= 1 [TB] $\times$ 4 [pieces]), where the number P of pieces of parallel processing is 4, where a capacity of one magnetic tape T is 12 TB, and where the assumed value V1 is 20 TB will be described as an example. In this case, a minimum value of N satisfying the following expression is 5.

$$(4\ [\text{TB}] + N \times 12\ [\text{TB}]) - 20\ [\text{TB}] \geq (4 - 1) \times 12\ [\text{TB}] = 36\ [\text{TB}]$$

Therefore, in this case, the calculation unit 42 calculates that the number of magnetic tapes T to be added to the storage pool is five.

In this example, in a case where the number P of pieces of parallel processing is not considered, two magnetic tapes T satisfying 16 TB (= 20 [TB] - 4 [TB]), which is a insufficient capacity of the storage pool, are added to the storage pool. On the other hand, in the present embodiment, five magnetic tapes T are added to the storage pool in consideration of the number P of pieces of parallel processing, and thus data can be recorded in the storage pool while maintaining a state where the number P of pieces of parallel processing is 4. In addition, in the present embodiment, magnetic tapes T of which the number is smaller than a number eight are added to the storage pool, the number eight being obtained by multiplying the number (= 2 [pieces]) of magnetic tapes T satisfying 16 TB which is an insufficient capacity of the storage pool by the number P (= 4) of pieces of parallel processing. Therefore, it is possible to add the appropriate number of magnetic tapes T to the storage pool.

The control unit 44 performs control of adding new magnetic tapes T of which the number is calculated by the calculation unit 42 to the storage pool. Examples of the control include adding identification information of the new magnetic tapes T to setting information in which a storage pool and a group of magnetic tapes T included in the storage pool are associated with each other. In addition, examples of the new magnetic tape T referred to here include an unused magnetic tape T, a used magnetic tape T in which data is not recorded by formatting, and the like.

Next, an operation of the information processing apparatus 12 according to the present embodiment will be described with reference to Fig. 6. In a case where the CPU 20 executes the information processing program 30, magnetic tape addition processing illustrated in Fig. 6 is executed. The magnetic tape addition processing illustrated in Fig. 6 is executed, for example, in a case where an execution start instruction and an assumed value V1 are input via the input unit 24 by an administrator. The magnetic tape addition processing illustrated in Fig. 6 may be executed, for example, in a case where the free capacity of the storage pool is smaller than a predetermined threshold value (for example, 20% of the total capacity of the storage pool).

In step S10 of Fig. 6, the reception unit 40 receives the assumed value V1 of the total capacity of the data to be recorded in the storage pool. In step S12, as described above, the calculation unit 42 calculates, as the number of magnetic tapes T to be added to the storage pool, a minimum value of N satisfying the equation (B).

In step S14, as described above, the control unit 44 performs control of adding new magnetic tapes T of which the number is calculated in step S12 to the storage pool. In a case where processing of step S14 is completed, the magnetic tape addition processing is completed.

As described above, according to the present embodiment, it is possible to add the appropriate number of magnetic tapes T to the storage pool according to the number P of pieces of parallel processing when recording data in the storage pool.

In the embodiment, in a case where the number of magnetic tapes T that are allowed to be added to the storage pool is equal to or smaller than the number calculated by the calculation unit 42, the control unit 44 may perform control of adding, to the storage pool, all the magnetic tapes T that are allowed to be added.

Further, in the embodiment, for example, as a hardware structure of a processing unit that executes various processing such as the reception unit 40, the calculation unit 42, and the control unit 44, the following various processors may be used. The various processors include, as described above, a CPU, which is a general-purpose processor that functions as various processing units by executing software (program), and a dedicated electric circuit, which is a processor having a circuit configuration specifically designed to execute a specific processing, such as a programmable logic device (PLD) or an application specific integrated circuit (ASIC) that is a processor of which the circuit configuration may be changed after manufacturing such as a field programmable gate array (FPGA).

One processing unit may be configured by one of these various processors, or may be configured by a combination of two or more processors of the same type or different types (for example, a combination of a plurality of FPGAs or a combination of a CPU and an FPGA). Further, the plurality of processing units may be configured by one processor.

As an example in which the plurality of processing units are configured by one processor, firstly, as represented by a computer such as a client and a server, a form in which one processor is configured by a combination of one or more CPUs and software and the processor functions as the plurality of processing units may be adopted. Secondly, as represented by a system on chip (SoC) or the like, a form in which a processor that realizes the function of the entire system including the plurality of processing units by one integrated circuit (IC) chip is used may be adopted. As described above, the various processing units are configured by using one or more various processors as a hardware structure.

Further, as the hardware structure of the various processors, more specifically, an electric circuit (circuitry) in which circuit elements such as semiconductor elements are combined may be used.

Further, in the embodiment, an example in which the information processing program 30 is stored (installed) in the storage unit 22 in advance has been described. On the other hand, the present disclosure is not limited thereto. The information processing program 30 may be provided by being recorded in a recording medium such as a compact disc read only memory (CD-ROM), a digital versatile disc read only memory (DVD-ROM), or a Universal Serial Bus (USB) memory. Further, the information processing program 30 may be downloaded from an external apparatus via a network.

In the disclosure of Japanese Patent Application No. 2020-149115, filed September 4, 2020, the entire contents of which are incorporated herein by reference. Further, all documents, patent applications, and technical standards mentioned in this specification are incorporated herein by reference to the same extent as in a case where each document, each patent application, and each technical standard are specifically and individually described by being incorporated by reference.

**Claims**

1.    An information processing apparatus comprising:

> at least one processor,
> wherein the processor is configured to

>> calculate, in a case of adding a new magnetic tape to a storage pool including a plurality of magnetic tapes, the number of magnetic tapes to be added to the storage pool such that a free capacity of the storage pool after addition of the new magnetic tape is set to be equal to or larger than a capacity obtained by adding, to an assumed value of a total capacity of data to be recorded in the storage pool, an excess according to the number of pieces of parallel processing when recording data in the storage pool, the number being equal to or smaller than a number obtained by multiplying the number of magnetic tapes satisfying an insufficient capacity of the storage pool by the number of pieces of parallel processing, and
>> perform control of adding the calculated number of new magnetic tapes to the storage pool.

2.    The information processing apparatus according to claim 1,
> wherein the processor is configured to calculate, as the number of magnetic tapes to be added to the storage pool, a minimum value of N (N is an integer equal to or larger than 0) satisfying the following equation (1),

$$\text{(free capacity of storage pool} + N \times \text{capacity of one magnetic tape to be added)} -$$
$$\text{assumed value of total capacity of data to be recorded in storage pool} \geq \text{(number of pieces of}$$
$$\text{parallel processing when recording data in storage pool - 1)} \times \text{capacity of one magnetic tape}$$
$$\cdots (1).$$

3.    The information processing apparatus according to claim 1 or 2,
> wherein the processor is configured to perform control of adding, to the storage pool, all magnetic tapes that are allowed to be added in a case where the number of magnetic tapes that are allowed to be added is equal to or smaller than the calculated number.

4. An information processing method executed by a processor of an information processing apparatus, the method comprising:

calculating, in a case of adding a new magnetic tape to a storage pool including a plurality of magnetic tapes, the number of magnetic tapes to be added to the storage pool such that a free capacity of the storage pool after addition of the new magnetic tape is set to be equal to or larger than a capacity obtained by adding, to an assumed value of a total capacity of data to be recorded in the storage pool, an excess according to the number of pieces of parallel processing when recording data in the storage pool, the number being equal to or smaller than a number obtained by multiplying the number of magnetic tapes satisfying an insufficient capacity of the storage pool by the number of pieces of parallel processing; and
performing control of adding the calculated number of new magnetic tapes to the storage pool.

5. An information processing program causing a processor of an information processing apparatus to execute a process comprising:

calculating, in a case of adding a new magnetic tape to a storage pool including a plurality of magnetic tapes, the number of magnetic tapes to be added to the storage pool such that a free capacity of the storage pool after addition of the new magnetic tape is set to be equal to or larger than a capacity obtained by adding, to an assumed value of a total capacity of data to be recorded in the storage pool, an excess according to the number of pieces of parallel processing when recording data in the storage pool, the number being equal to or smaller than a number obtained by multiplying the number of magnetic tapes satisfying an insufficient capacity of the storage pool by the number of pieces of parallel processing; and
performing control of adding the calculated number of new magnetic tapes to the storage pool.

# FIG. 1

10

14

12

TAPE LIBRARY

INFORMATION PROCESSING APPARATUS

T

| TAPE DRIVE | ... | TAPE DRIVE |

18

# FIG. 2

12

20 21 23

| CPU | MEMORY | DISPLAY UNIT |

27

30

| STORAGE UNIT | INPUT UNIT | NETWORK I/F | EXTERNAL I/F |
| INFORMATION PROCESSING PROGRAM | | | |

22 24 25 26

# FIG. 3

ONE LOGICAL VOLUME

pool1

tape1

tape2

tape3

tape4

# FIG. 4

14

TAPE LIBRARY

TAPE DRIVE — 18

tape1 — T

TAPE DRIVE — 18

tape2 — T

TAPE DRIVE — 18

tape3 — T

TAPE DRIVE — 18

tape4 — T

DATA1

DATA2

DATA3

DATA4

12

INFORMATION PROCESSING APPARATUS

## FIG. 5

INFORMATION PROCESSING APPARATUS    12

| RECEPTION UNIT 40 | CALCULATION UNIT 42 | CONTROL UNIT 44 |

## FIG. 6

START

RECEIVE ASSUMED VALUE    S10

CALCULATE THE NUMBER OF MAGNETIC TAPES TO BE ADDED    S12

ADD MAGNETIC TAPES    S14

END

## INTERNATIONAL SEARCH REPORT

| International application No. |
| --- |
| PCT/JP2021/017593 |

**A. CLASSIFICATION OF SUBJECT MATTER**
Int.Cl. G06F16/13(2019.01)i, G06F3/06(2006.01)i
FI: G06F3/06301Z, G06F3/06302B, G06F16/13100

According to International Patent Classification (IPC) or to both national classification and IPC

**B. FIELDS SEARCHED**

Minimum documentation searched (classification system followed by classification symbols)
Int.Cl. G06F16/13, G06F3/06

Documentation searched other than minimum documentation to the extent that such documents are included in the fields searched
Published examined utility model applications of Japan    1922–1996
Published unexamined utility model applications of Japan    1971–2021
Registered utility model specifications of Japan    1996–2021
Published registered utility model applications of Japan    1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2007-234123 A (MATSUSHITA ELECTRIC INDUSTRIAL CO., LTD.) 13 September 2007 (2007-09-13) | 1-5 |
| A | JP 4-184640 A (NEC CORPORATION) 01 July 1992 (1992-07-01) | 1-5 |
| A | JP 2002-334539 A (MATSUSHITA ELECTRIC INDUSTRIAL CO., LTD.) 22 November 2002 (2002-11-22) | 1-5 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 02 July 2021 | 13 July 2021 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/017593

```
JP 2007-234123 A   13 September 2007   (Family: none)

JP 4-184640 A      01 July 1992        (Family: none)

JP 2002-334539 A   22 November 2002    (Family: none)
```

Form PCT/ISA/210 (patent family annex) (January 2015)

**EP 4 209 917 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009217466 A

- JP 2020149115 A